(19) Europäisches Patentamt / European Patent Office / Office européen des brevets

(11) **EP 4 501 852 A1**

(12) **EUROPEAN PATENT APPLICATION**
published in accordance with Art. 153(4) EPC

(43) Date of publication:
**05.02.2025 Bulletin 2025/06**

(21) Application number: **23774939.5**

(22) Date of filing: **22.03.2023**

(51) International Patent Classification (IPC):
$C01B\ 39/48$ (2006.01)     $B01D\ 53/94$ (2006.01)
$B01J\ 20/18$ (2006.01)     $B01J\ 20/30$ (2006.01)
$B01J\ 29/76$ (2006.01)     $B01J\ 29/86$ (2006.01)
$B01J\ 29/87$ (2006.01)     $C01B\ 39/06$ (2006.01)
$C01B\ 39/12$ (2006.01)

(52) Cooperative Patent Classification (CPC):
**B01D 53/94; B01J 20/18; B01J 20/30; B01J 29/76; B01J 29/86; B01J 29/87; C01B 39/06; C01B 39/12; C01B 39/48**

(86) International application number:
**PCT/JP2023/011190**

(87) International publication number:
**WO 2023/182344 (28.09.2023 Gazette 2023/39)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **25.03.2022 JP 2022050584**

(71) Applicant: **Mitsui Mining & Smelting Co., Ltd.**
**Shinagawa-ku**
**Tokyo 141-8584 (JP)**

(72) Inventors:
• **SUWA, Mayuko**
  **Ageo-shi**
  **Saitama 362-0025 (JP)**
• **TAGO, Teruoki**
  **Tokyo 152-8550 (JP)**
• **GOTO, Hidekazu**
  **Tokyo 152-8550 (JP)**
• **ABIRU, Ryosuke**
  **Tokyo 152-8550 (JP)**

(74) Representative: **Novagraaf Technologies**
**Bâtiment O2**
**2, rue Sarah Bernhardt**
**CS90017**
**92665 Asnières-sur-Seine Cedex (FR)**

(54) **ZEOLITE, PRODUCTION METHOD THEREOF, HYDROCARBON ADSORBENT AND EXHAUST GAS PURIFYING CATALYST**

(57)     Provided are zeolite which, even in a severe thermal environment, maintains the hydrocarbon adsorbency and has increased catalytic reactivity and improved heat resistance, a production method thereof, a hydrocarbon adsorbent and an exhaust gas purifying catalyst. The zeolite is a zeolite having large pores with 12-member rings in a framework structure and encapsulating metal-containing particles. The metal contained in the metal-containing particles preferably contains at least one of metals selected from the group consisting of Cr, Mn, Fe, Co, Ni, Cu, Zn, Ga, Ge, Sn, Zr, Rh, Ru, Pd, Pt, Ag, Ir, Au, Nb and Mo.

EP 4 501 852 A1

## Description

Technical Field

The present invention relates to a zeolite, a method for producing the same, a hydrocarbon adsorbent, and an exhaust gas purifying catalyst.

Background Art

Synthetic zeolites are crystalline aluminosilicates, and have uniform pores attributable to their crystal structure. With making the most of this characteristic, the synthetic zeolites are industrially utilized as molecular sieve adsorbents which adsorb only molecules having a specific size, adsorption separating agents which adsorb molecules having strong affinity, or catalyst substrates. Such zeolites are, since being excellent in hydrocarbon adsorbency, used as catalysts in petrochemical industries, and compositions for purifying exhaust gas. The zeolites to be used as the compositions for purifying exhaust gas demand high crystallinity and catalytic activity capable of withstanding a severe thermal environment.

For example, a zeolite to be used for a composition for purifying exhaust gas carries metal particles of a base metal or a noble metal as an exhaust gas purifying catalyst. When these metal particles are carried on the surface of the zeolite, moisture contained in an exhaust gas is adsorbed by the metal to reduce the hydrocarbon adsorbency of the metal and decrease the catalytic reactivity. When these metal particles are incorporated inside the zeolite, the metal particles migrate in the zeolite under a high-temperature thermal environment, and the metal particles cause "sintering" in which the metal particles contact each other and grow up, to cause disadvantages of reduction of the catalytic activity and clogging of pores of the zeolite. For example, Patent Literature 1 discloses a zeolite having an MFI type structure which encapsulates the metal particles having a larger mean particle diameter than a mean diameter of pores the zeolite, in order to prevent sintering of metal particles.

Citation List

Patent Literature

Patent Literature 1: Japanese Patent Laid-Open No. 2017-128480

Summary of Invention

Technical Problem

When in order to suppress sintering of metal particles, a zeolite having an MFI type structure having a relatively small pore size is made to encapsulate metal particles having a larger mean particle diameter than the pore size of the zeolite, since the pore size of the zeolite of the MFI type structure is small, bulky molecules cannot be adsorbed by the zeolite. Further, in zeolites having a relatively small pore size, as seen in the zeolite of the MFI type structure, the diffusion velocity of exhaust gas is slow and the catalytic reactivity may unfortunately decrease.

Accordingly, the present invention has an object to provide a zeolite which, even in a severe thermal environment, maintains the hydrocarbon adsorbency and has increased catalytic reactivity and improved heat resistance, a production method thereof, a hydrocarbon adsorbent, and an exhaust gas purifying catalyst.

Solution to Problem

The present invention proposes a zeolite having large pores having a framework structure with 12-member rings and encapsulating metal-containing particles.

The present invention proposes a method for producing a zeolite, the method comprising a step of preparing a reaction mixture containing a silica source, an alumina source, an organic structure-directing agent, a metal-containing particle source, water and as required, an alkali metal source, a step of heating the reaction mixture to obtain a crystallized powder, and a step of heating the crystallized powder to remove the organic structure-directing agent to thereby obtain the zeolite having large pores with 12-member rings in a framework structure and encapsulating metal-containing particles, wherein the reaction mixture has a composition represented by the following molar ratio or atomic ratio, and contains 0.1% by mass or more and 12% by mass or less of a metal contained in the metal-containing particle source with respect to a total amount of a solid content of the reaction mixture.

Organic structure-directing agent/Si molar ratio = 0.1 or higher and 0.9 or lower

$SiO_2/Al_2O_3$ molar ratio = 2 or higher and 200,000 or lower Alkali metal/Si atomic ratio = 0 or higher and 0.5 or lower

The present invention proposes a method for producing a zeolite, the method comprising:

a step of preparing a reaction mixture containing a silica source, an alumina source, an organic structure-directing agent, a metal-containing particle source, a reducing agent, water and as required, an alkali metal source;
a step of heating the reaction mixture to obtain a crystallized powder; and
a step of heating the crystallized powder to remove the organic structure-directing agent to thereby obtain the zeolite having large pores with 12-member rings in a framework structure and encapsulating metal-containing particles, wherein the reaction mixture has a composition represented by the following molar ratio or atomic ratio, and contains 0.1% by mass or more and 12% by mass or less of a metal contained in the metal-containing particle source with respect to the total amount of a solid content of the reaction mixture.

Organic structure-directing agent/Si molar ratio = 0.1 or higher and 0.9 or lower

$SiO_2/Al_2O_3$ molar ratio = 2 or higher and 200,000 or lower Alkali metal/Si atomic ratio = 0 or higher and 0.5 or lower

Advantageous Effects of Invention

The present invention can provide a zeolite, even in a severe thermal environment, maintaining the hydrocarbon adsorbency and being enhanced in the catalytic reactivity, and being improved in the heat resistance, a method for producing the same, a hydrocarbon adsorbent, and an exhaust gas purifying catalyst.

Brief Description of Drawings

[Figure 1] Figure 1 is a flow chart showing a first example of a first aspect of a method for producing a zeolite.
[Figure 2] Figure 2 is a flow chart showing a second example of the first aspect of a method for producing a zeolite.
[Figure 3] Figure 3 is a flow chart showing a third example of the first aspect of a method for producing a zeolite.
[Figure 4] Figure 4 is a flow chart showing a first example of a second aspect of a method for producing a zeolite.
[Figure 5] Figure 5 is a flow chart showing a second example of the second aspect of a method for producing a zeolite.
[Figure 6] Figure 6 is a flow chart showing a third example of the second aspect of a method for producing a zeolite.
[Figure 7] Figure 7 is a diagram showing X-ray diffraction spectra of BEA type zeolites obtained in Examples 1 to 3.
[Figure 8] Figure 8 shows a TEM photograph of a BEA type zeolite obtained in Comparative Example 1.

Description of Embodiments

Then, the present invention will be described based on embodiments of the present invention, but the present invention is not limited to the embodiments to be interpreted below.

Zeolite

One embodiment of the present invention provides a zeolite having large pores with 12-member rings in a framework structure and encapsulating metal-containing particles.
The zeolite has a crystal structure of a crystalline or quasi-crystalline aluminosilicate salt constituted of a repeating unit of $SiO_4$ and $AlO_4$ tetrahedrons. The unit forming the framework structure of the zeolite is described as $TO_4$ unit in some cases. To a framework structure of zeolite, a structure code of three alphabetical capital letters defined by International Zeolite Association is assigned. This structure can be identified by the database (database of Zeolite Structures) by the Structure Commission of the International Zeolite Association.

The zeolite has large pores with 12-member rings in a framework structure . It is preferable that such a zeolite contains at least one kind selected from the group consisting of BEA type zeolite, MSE type zeolite, MTW type zeolite, CON type zeolite, FAU type zeolite, MOR type zeolite and EON type zeolite. The zeolite may be a zeolite having one kind of framework structure, or may contain two or more kinds of zeolite having different framework structures. In the present description, a "zeolite having large pores with 12-member rings in a framework structure" is called a "zeolite having large pores with 12-member rings" in some cases. If a zeolite encapsulating metal-containing particles is the zeolite having large pores with 12-member rings, even bulky molecules can be adsorbed in pores of the zeolite. The zeolite having large pores with 12-member rings, for example, since the velocity of exhaust gas or the like diffusing in the zeolite becomes high, even in a severe thermal environment, can maintain the hydrocarbon adsorbency and be enhanced in the catalytic reactivity, and can be improved in the heat resistance. The zeolite suffices as long as having large pores with 12-member rings, and may have, in addition to the framework structure with 12-member rings, a framework structure with 10-member rings, 8-member rings, 6-member rings, 5-member rings or 4-member rings. The framework structure with 12-member rings forms mainly pores having a tunnel type (straight type) structure. The framework structure with 10-member rings forms pores having a tunnel type (straight type) structure or a cage type structure. The framework structure with 8-member rings, 6-member rings, 5-member rings or 4-member rings forms pores having a cage type structure, respectively. The zeolite suffices as long as having pores with 12-member rings in a framework structure. The BEA type zeolite or MTW type zeolite has only pores having only a tunnel type (straight type) framework structure of at most 12-member rings. The MSE type zeolite has pores having a tunnel type (straight type) structure of at most 12-member rings, a cage type structure of at most 10-member rings, and a cage type structure (cage type structure composed of 6-member rings and 4-member rings) of at most 6-member rings. The MOR type zeolite has pores having a tunnel type (straight type) structure of at most 12-member rings, and a cage type structure of at most 8-member rings. The CON type zeolite has pores having a tunnel type (straight type) structure of at most 12-member rings, a tunnel type (straight type) structure of at most 10-member rings, a structure of at most 6-member rings, and a structure of at most 5-member rings. The FAU type zeolite has pores having a cage type structure of at most 12-member rings, and a cage type structure of at most 6-member rings. The EON type zeolite has pores having a tunnel type (straight type) structure of at most 12member rings, a tunnel type (straight type) structure of at most 8-member rings, and a cage type structure (cage type structure composed of 8-member rings, 6-member rings and 4-member rings).

The molar ratio of $SiO_2/Al_2O_3$ of the zeolite is preferably in the range of 20 or higher and 4,000 or lower. A higher $SiO_2/Al_2O_3$ molar ratio of the zeolite gives a higher hydrothermal durability. The hydrothermal durability indicates difficulty in the crystal structure being damaged when the zeolite is exposed to a high temperature in the presence of steam. With a higher hydrothermal durability, even in a severe thermal environment, the hydrocarbon adsorbency is maintained and the heat resistance is improved. The $SiO_2/Al_2O_3$ molar ratio of the zeolite may be in the range of 25 or higher and 3,500 or lower, or may be in the range of 30 or higher and 3,000 or lower. With regard to the $SiO_2/Al_2O_3$ molar ratio of the zeolite, the amount of Si and the amount of Al are measured by an element analysis using a scanning X-ray fluorescence analyzer (for example, ZSX Primus II, manufactured by Rigaku Corp.), and the $SiO_2/Al_2O_3$ molar ratio can be measured from the obtained amounts of Si and Al.

The Al/Si atomic ratio of the zeolite is preferably in the range of 0.0005 or higher and 1.0 or lower. When the framework structure of the zeolite varies, the range of the Al/Si atomic ratio of the zeolite also varies. With a higher Al/Si atomic ratio of the zeolite, the ion exchange capacity of the zeolite is more easily raised. The ion exchange capacity of the zeolite develops depending on the valency of cations present in the framework. In the framework of the zeolite, Si is present as tetravalent cations, and Al is present as trivalent cations. With increasing Al in the framework of the zeolite, the charge of the framework of the zeolite becomes minus and in order to compensate for the minus charge, cations are introduced from outside the framework. The cations introduced from outside the framework of the zeolite are easily ion-exchanged with other cations, and the ion exchange capacity of the zeolite is raised. Although with a higher Al/Si atomic ratio, the ion exchange capacity of the zeolite more easily becomes high, when the Al/Si atomic ratio becomes too high, the $SiO_2/Al_2O_3$ molar ratio becomes relatively low and the hydrothermal durability becomes low. For example, when ammonia ($NH_3$) is adsorbed on a zeolite, and thereafter desorbed by calcining, 4-coordinated aluminum forms acid points adjacent to Al atoms. The acid points made by 4-coordinated aluminum in the zeolite are Bronsted acid points. The acid points made by 4-coordinated aluminum in the zeolite become active points of a reaction when adsorbed hydrocarbon is cleaned. With the Al/Si atomic ratio of the zeolite being in the range of 0.0005 or higher and 1.0 or lower, while a high heat resistance is maintained, the performance of cleaning the adsorbed hydrocarbon can be enhanced. The Al/Si atomic ratio of the zeolite may be in the range of 0.0006 or higher and 0.1 or lower, or may be in the range of 0.0007 or higher and 0.04 or lower. The Al/Si atomic ratio or the (Al+A)/Si atomic ratio described later of the zeolite can be measured by measuring the Si amount, the Al amount and an amount of atom A described later by elemental analysis using a scanning X-ray fluorescence analyzer (for example, ZSX Primus II, manufactured by Rigaku Corp.) .

The zeolite may contain an A atom, and the A atom is at least one of atoms selected from the group consisting of B, Ga, Ge, Zr, Cu, Fe, Zn, Sn, P, Co, Mn, Cr and Hf, and the (A1+A)/Si atomic ratio of the total of Al and the A atom to silicon (Si) contained in the zeolite is in the range of 0.0005 or higher and 1.0 or lower. The A atom is preferably an atom which can become a trivalent cation. The A atom is introduced in the framework of the zeolite in place of Al. The introduction of the A atom in place of Al makes the Al content low and can give the zeolite whose $SiO_2/Al_2O_3$ molar ratio is in a relatively high range of 20 or higher and 4,000 or lower. The zeolite having such a relatively high $SiO_2/Al_2O_3$ molar ratio, even in a severe thermal environment, can maintain the hydrocarbon adsorbency and raise the catalytic reactivity.

A metal contained in the metal-containing particles preferably contains at least one of metals selected from the group consisting of Cr, Mn, Fe, Co, Ni, Cu, Zn, Ga, Ge, Sn, Zr, Rh, Ru, Pd, Pt, Ag, Ir, Au, Nb and Mo. The metal contained in the metal-containing particles may be a metal lower in the ionization tendency than aluminum (Al) and equal to or higher than Cu (the standard redox potential $E_0$ is the value of Cu or lower), or may also be a metal lower in the ionization tendency than copper (Cu) (the standard redox potential $E_0$ exceeds the value of Cu). The metal contained in the metal-containing particles can be selected according to application objects. The metal lower in the ionization tendency than aluminum (Al) and equal to or higher than copper (Cu) includes at least one of metals selected from the group consisting of Cr, Mn, Fe, Co, Ni, Cu, Zn, Ga, Ge, Sn, Zr, Nb and Mo. The metal higher in the ionization tendency than copper (Cu) includes at least one of metals selected from the group consisting of Rh, Ru, Pd, Pt, Ag and Au. The metal-containing particles may be particles composed of a compound containing a metal, or may also be particles composed of a simple metal. In the case where the metal-containing particles are particles composed of a compound containing a metal, the metal-containing particles can be turned to metal-containing particles composed of a simple metal, for example, by being heated in a reducing gas atmosphere. The zeolite having large pores, by encapsulating the metal-containing particles, even in a severe thermal environment, can maintain the catalytic activity of the metal of the metal-containing particles without the metal-containing particles being sintered on the outer surface of the zeolite, and even in the severe thermal environment, can maintain a high catalytic reactivity.

The metal-containing particles encapsulated in the zeolite having large pores with 12-member rings can be confirmed, for example, by measurement by X-ray absorption fine structure analysis (XASF), or by a transmission electron microscope (TEM).

For example, when such a state can be observed by a TEM image that metal particles are present not on the zeolite surface but inside the zeolite, the encapsulation of the metal-containing particles in the zeolite having large pores with 12-member rings can be confirmed.

The size of the metal-containing particles can be measured by measuring, as the diameter of the metal-containing particles, the mean of lengths and breadths of the metal-containing particles encapsulated in the zeolite, from an image of a transmission electron microscope (TEM). The mean diameter of the metal-containing particles encapsulated in 100 particles of the zeolite, analyzed from the TEM image, is preferably in the range of 0.1 nm or larger and 30 nm or smaller, more preferably in the range of 0.5 nm or larger and 28 nm or smaller, still more preferably in the range of 1 nm or larger and 25 nm or smaller and especially preferably in the range of 3 nm or larger and 20 nm or smaller. The shape of the metal-containing particles which can be confirmed by the TEM image is nearly circular, but in the case of an oval shape that has the length and the breadth, the mean value of the length and the breadth is regarded as the diameter. Moreover, it is preferable that the length and the breadth of the metal-containing particles are measured by making one of the length and the breadth to pass through the central point (for example, the central point of the length) of the other thereof (for example, the breadth).

The metal content in the metal-containing particles is, with respect to 100% by mass of the total amount of the zeolite encapsulating the metal-containing particles, preferably in the range of 0.2% by mass or higher and 11.0% by mass or lower. When the metal content in the metal-containing particles is, with respect to 100% by mass of the total amount of the zeolite encapsulating the metal-containing particles, in the range of 0.2% by mass or higher and 11.0% by mass or lower, the metal-containing particles encapsulated in the zeolite, since being suppressed in sintering, even in a severe thermal environment, can maintain a high catalytic reactivity, and are improved in the heat resistance. The metal content in the metal-containing particles is, with respect to 100% by mass of the total amount of the zeolite encapsulating the metal-containing particles, more preferably in the range of 0.8% by mass or higher and 9.0% by mass or lower and still more preferably in the range of 1.5% by mass or higher and 7.0% by mass or lower.

Method for producing the zeolite

A first aspect of a method for producing the zeolite includes a step of preparing a reaction mixture containing a silica source, an alumina source, an organic structure-directing agent, a metal-containing particle source, water and as required, an alkali metal source, a step of heating the reaction mixture to obtain a crystallized powder, and a step of heating the crystallized powder to remove the organic structure-directing agent to thereby obtain the zeolite having large pores with 12-member rings in a framework structure and encapsulating metal-containing particles, wherein the reaction mixture has a composition represented by the following molar ratio or atomic ratio, and contains 0.1% by mass or more and 12% by mass or less of a metal contained in the metal-containing particle source with respect to the total amount of a solid content of the reaction mixture.

Organic structure-directing agent/Si molar ratio = 0.1 or higher and 0.9 or lower

$SiO_2/Al_2O_3$ molar ratio = 2 or higher and 200,000 or lower Alkali metal/Si atomic ratio = 0 or higher and 0.5 or lower

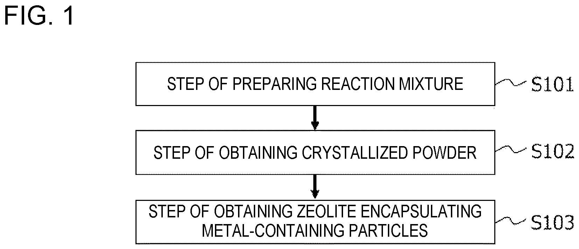

Figure 1 is a flow chart showing a first example of the first aspect of the method for producing the zeolite. The first example of the first aspect of the method for producing the zeolite includes a step S101 of preparing the reaction mixture, a step S102 of heating the reaction mixture to obtain a crystallized powder, and a step S103 of heating the crystallized powder to remove the organic structure-directing agent to thereby obtain the zeolite having large pores with 12-member rings in a framework structure and encapsulating metal-containing particles. In the case where the reaction mixture contains the alkali metal source, the zeolite which encapsulates the metal-containing particles and in which cations are alkali metal ions is obtained. In the present description, the heating of the reaction mixture is called first heating, and the heating of the crystallized powder is called second heating.

The first aspect of the method for producing the zeolite may include a step of reducing a zeolite encapsulating metal-containing particles using a reducing agent. In the step of reduction using the reducing agent, the reducing agent refers to nitrogen, hydrogen or a reducing compound, and there can be obtained the zeolite encapsulating the metal-containing particles which are metal particles composed of a reduced simple metal made by reducing a metal contained in the metal-containing particles by heating the zeolite in an atmosphere containing nitrogen, hydrogen or a reducing compound. In the present description, the heating of the zeolite encapsulating the metal-containing particles together with the reducing agent is called fourth heating.

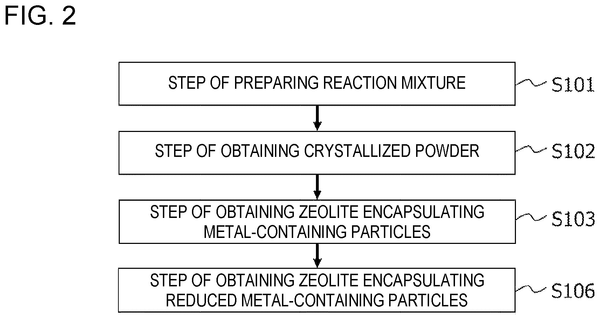

Figure 2 is a flow chart showing a second example of the first aspect of the method for producing the zeolite. It is preferable that the second example of the first aspect of the method for producing the zeolite includes a step S101 of preparing the reaction mixture, a step S102 of first heating the reaction mixture to obtain a crystallized powder, a step S103 of second heating the crystallized powder to remove the organic structure-directing agent to thereby obtain the zeolite having large pores with 12-member rings in a framework structure and encapsulating metal-containing particles, and after the step S103 of obtaining the zeolite encapsulating the metal-containing particles, a step S106 of subjecting the zeolite encapsulating the metal-containing particles together with the reducing agent to the fourth heating to thereby obtain the zeolite encapsulating the reduced metal-containing particles by the reducing agent. It is preferable to obtain the zeolite encapsulating the reduced metal-containing particles by the fourth heating with the reducing agent.

The first aspect of the method for producing the zeolite may include a step of ion exchange using an acid or an ammonium salt of cation types of the zeolite encapsulating the metal-containing particles. Depending on the kind of a metal contained in the metal-containing particles, it is preferable to include the step of ion exchange using an acid or an ammonium salt.

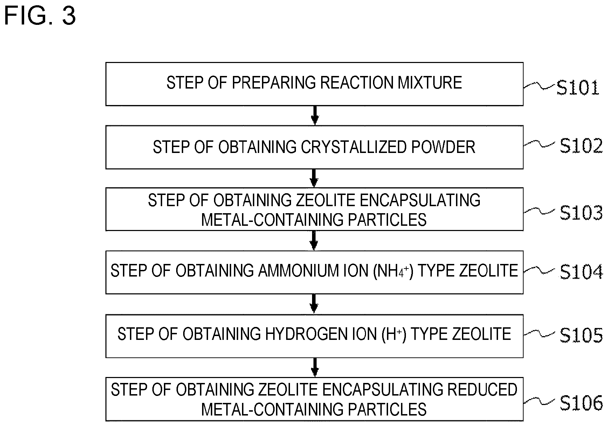

Figure 3 is a flow chart showing a third example of the first aspect of the method for producing the zeolite. The third example of the first aspect of the method for producing the zeolite, in the case where the reaction mixture contains the alkali metal source, may include, after there is obtained the zeolite having large pores with 12-member rings in a framework structure and encapsulating the metal-containing particles, a step S104 of ion-exchanging alkali metal ions or ions contained in the organic structure-directing agent (for example, tetraethylammonium type zeolite) for ammonium ions $(NH_4^+)$ to obtain an ammonium ion $(NH_4^+)$ type zeolite, a step S105 of heating the ammonium ion $(NH_4^+)$ type zeolite to obtain a hydrogen ion $(H^+)$ type zeolite which becomes a solid acid catalyst, and after the hydrogen ion $(H+)$ type zeolite is obtained, a step S106 of subjecting the zeolite together with the reducing agent to the fourth heating to reduce a metal in the metal-containing particles to thereby obtain the zeolite encapsulating the reduced metal-containing particles. In the present description, the heating for ion-exchanging the ammonium ion $(NH_4^+)$ type zeolite for the hydrogen ion $(H^+)$ type zeolite is called third heating.

A second aspect of the method for producing the zeolite includes a step of preparing a reaction mixture containing a silica source, an alumina source, an organic structure-directing agent, a metal-containing particle source, a reducing agent, water and as required, an alkali metal source, a step of heating the reaction mixture to obtain a crystallized powder, and heating the crystallized powder to remove the organic structure-directing agent to thereby obtain the zeolite having large pores with 12-member rings in a framework structure and encapsulating metal-containing particles, wherein the reaction mixture has a composition represented by the following molar ratio or atomic ratio, and contains 0.1% by mass or more and 12% by mass or less of a metal contained in the metal-containing particle source with respect to the total amount of a solid content of the reaction mixture.

Organic structure-directing agent/Si molar ratio = 0.1 or higher and 0.9 or lower

$SiO_2/Al_2O_3$ molar ratio = 2 or higher and 200,000 or lower Alkali metal/Si atomic ratio = 0 or higher and 0.5 or lower

The second aspect of the method for producing the zeolite is different from the first aspect of the method for producing the zeolite in that the reaction mixture contains the reducing agent. In the case where the reaction mixture contains the reducing agent, after the zeolite encapsulating the metal-containing particles is obtained, a step of reduction using the reducing agent may not be included.

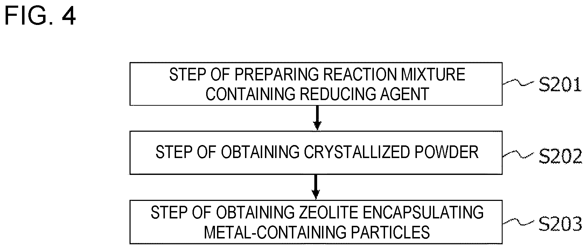

Figure 4 is a flow chart showing a first example of the second aspect of the method for producing the zeolite. The first example of the second aspect of the method for producing the zeolite includes a step S201 of preparing the reaction mixture, a step S202 of first heating the reaction mixture to obtain a crystallized powder, and a step S203 of second heating the crystallized powder to remove the organic structure-directing agent to thereby obtain the zeolite having large pores with 12-member rings in a framework structure and encapsulating the reduced metal-containing particles.

The second aspect of the method for producing the zeolite may include a step of ion exchange using an acid or an ammonium salt of the zeolite encapsulating the metal-containing particles. Depending on the kind of a metal contained in the metal-containing particles, it is preferable to include the step of ion exchange using an acid or an ammonium salt.

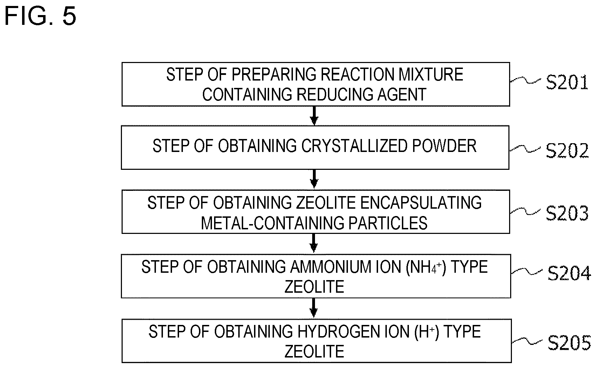

Figure 5 is a flow chart showing a second example of the second aspect of the method for producing the zeolite. The second example of the second aspect of the method for producing the zeolite may include, after there is obtained the zeolite having large pores with 12-member rings in a framework structure and encapsulating the reduced metal-containing particles, a step S204 of ion-exchanging alkali metal ions or ions contained in the organic structure-directing agent (for example, tetraethylammonium type zeolite) for ammonium ions ($NH_4^+$) using an ammonium salt, to obtain an ammonium ion ($NH_4^+$) type zeolite, and a step S205 of subjecting the ammonium ion ($NH_4^+$) type zeolite to the third heating to thereby obtain a hydrogen ion ($H^+$) type zeolite to become a solid acid catalyst.

The second aspect of the method for producing the zeolite may include a step of ion exchange using an acid of the zeolite encapsulating the metal-containing particles. In the case where a metal contained in the metal-containing particles is a noble metal, since the metal contained in the metal-containing particles is hardly eluted with the acid, it is preferable to include the step of ion exchange using an acid. By the ion exchange using the acid, alkali metal ions or ions contained in the organic structure-directing agent (for example, tetraethylammonium ions) are ion exchanged for hydrogen ions, whereby a hydrogen ion ($H^+$) type zeolite to become a solid acid catalyst can be obtained. In the step of ion exchange using an acid, since water together with the acid is brought into contact with the zeolite, in the case where the reaction mixture contains an A atom source, there can be obtained a zeolite in a predetermined range of the (Al + A)/Si atomic ratio and in the range of the $SiO_2/Al_2O_3$ molar ratio of 20 or higher and 4,000 or lower, by removing A atoms from the framework of the zeolite by the acid treatment and together with hydrolysis.

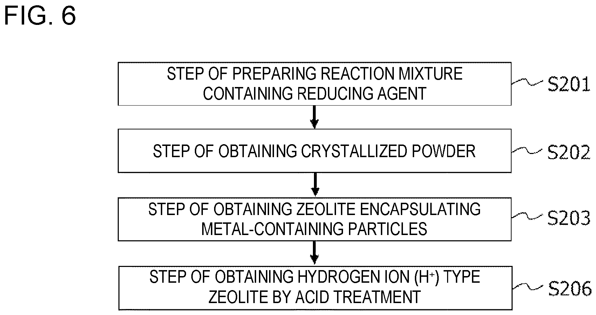

Figure 6 is a flow chart showing a third example of the second aspect of the method for producing the zeolite. The third example of the second aspect of the method for producing the zeolite includes a step S206 of acid treatment to obtain a hydrogen ion ($H^+$) type zeolite. The step S206 of acid treatment to obtain a hydrogen ion ($H^+$) type zeolite to become a solid acid catalyst may include a step of making water together with an acid to be brought into contact with the zeolite to remove an A element contained the framework of the zeolite.

Step of preparing the reaction mixture

The reaction mixture, in the first aspect, contains the silica source, the alumina source, the organic structure-directing agent, the metal-containing particle source, water and as required, the alkali metal source.

The reaction mixture, in the second aspect, contains the silica source, the alumina source, the organic structure-directing agent, the metal-containing particle source, the reducing agent, water and as required, the alkali metal source.

The reaction mixture has a composition represented by the following molar ratio or atomic ratio.

Organic structure-directing agent/Si molar ratio = 0.1 or higher and 0.9 or lower

$SiO_2/Al_2O_3$ molar ratio = 2 or higher and 200,000 or lower Alkali metal/Si atomic ratio = 0 or higher and 0.5 or lower

The organic structure-directing agent (OSDA) becomes a template molecule and forms large pores with 12-member rings in a framework structure.

In the reaction mixture, when the organic structure-directing agent/Si molar ratio is 0.1 or higher and 0.9 or lower, the molar ratio of the organic structure-directing agent to Si in $SiO_2$ constituting the framework of the zeolite is relatively low, and the zeolite having large pores with 12-member rings in a framework structure can be produced. When the molar ratio of the organic structure-directing agent to Si in $SiO_2$ constituting the framework of the zeolite becomes high, for example, hydroxide ions contained in the organic structure-directing agent easily form pores liable to cause structural defects and in the case of being placed in a severe thermal environment, the structural defects increase in some cases. When the organic structure-directing agent/Si molar ratio is 0.1 or higher and 0.9 or lower, the molar ratio of the organic structure-directing agent with respect to Si in $SiO_2$ constituting the framework of the zeolite is relatively low, and even in the case of being placed in a severe thermal environment, the formation of pores liable to cause structural defects is suppressed, and the zeolite having large pores with 12-member rings in a framework structure can be produced. In the reaction mixture, the organic structure-directing agent/Si molar ratio is preferably 0.01 or higher and more preferably 0.1 or higher, and may also be 0.3 or higher. In the reaction mixture, the organic structure-directing agent/Si molar ratio is preferably 0.8 or lower and more preferably 0.6 or lower, and may also be 0.5 or lower.

In the reaction mixture, when the $SiO_2/Al_2O_3$ molar ratio is 2 or higher and 200,000 or lower, there can be obtained the zeolite having a $SiO_2/Al_2O_3$ molar ratio of 20 or higher and 4,000 or lower and having large pores with 12-member rings. A higher $SiO_2/Al_2O_3$ molar ratio of the obtained zeolite gives the zeolite being high in the hydrothermal durability and even in a severe thermal environment, maintaining the hydrocarbon adsorbency, and improved in the heat resistance. In the reaction mixture, the $SiO_2/Al_2O_3$ molar ratio may also be 5 or higher and may also be 10 or higher, and may also be 100,000 or lower.

The reaction mixture may not contain the alkali metal source. In the reaction mixture, the alkali metal/Si atomic ratio is 0 or higher and 0.5 or lower. In the case where the reaction mixture contains no alkali metal source, the amount of hydroxide ions contained in the alkali metal source can be reduced, and the formation of pores liable to cause structural defects is suppressed, and there can be produced the zeolite having large pores with 12-member rings in a framework structure . In the case where the reaction mixture contains the alkali metal source, the alkali metal/Si atomic ratio may be in the range of 0.1 or higher and 0.5 or less and may also be 0.15 or higher. The alkali metal source acts as a mineralizer to make metal components such as Si and Al forming the framework structure of the zeolite to be dissolved in water. In the case where the alkali metal is, for example, Na, the alkali metal/Si atomic ratio is represented as the Na/Si atomic ratio in some cases.

Silica source

The silica source contained in the reaction mixture to be usable is a silica itself or a silicon-containing compound capable of forming silicate ions in water. The silica source specifically includes wet-method silica, dry-method silica, colloidal silica, water glass, sodium silicate and aluminosilicate gel. These silica sources can be used singly or in a combination of two or more kinds. Among the silica sources, it is preferable to use at least one kind selected from the group consisting of silica (silicon dioxide), aluminosilicate gel and colloidal silica, because by-products are hardly produced and a target BEA type zeolite can be produced. Examples of commercially available colloidal silica include Snowtex(R) ST-O, ST-O-40, manufactured by Nissan Chemical Industries, Ltd., and LUDOX(R) AS-40, HS-40, manufactured by Sigma-Aldrich Corp.

Alumina source

The alumina source contained in the reaction mixture to be usable is, for example, a water-soluble aluminum-containing compound. The alumina source specifically includes sodium aluminate, aluminum nitrate, aluminum sulfate, aluminum hydroxide and aluminosilicate gel. These alumina sources can be used singly or in a combination of two or more kinds. Among the alumina sources, it is preferable to use at least one kind selected from the group consisting of sodium aluminate, aluminum hydroxide, aluminum nitrate and aluminosilicate gel, because by-products are hardly produced and a target zeolite can be produced.

Organic structure-directing agent

The organic structure-directing agent contained in the reaction mixture depends on a zeolite as a target.

The organic structure-directing agent for producing a BEA type zeolite includes tetraethylammonium bromide (TEABr) and tetraethylammonium hydroxide (TEAOH).

In order to produce an MSE type zeolite, the organic structure-directing agent includes substances containing an N,N,N',N'- tetraalkylbicyclo[2.2.2]oct-7-ene-2,3:5,6-dipyrollidinium ion. The organic structure-directing agent for producing the MSE type zeolite may be N,N,N',N'- tetraalkylbicyclo[2.2.2]oct-7-ene-2,3:5,6-dipyrollidinium iodide, and the alkyl groups may be identical or different.

The organic structure-directing agent for producing an MTW type zeolite includes tetraethylammonium hydroxide containing a tetraethylammonium ion.

The organic structure-directing agent for producing a CON type zeolite includes tetraethylammonium hydroxide or tetraethylammonium bromide containing a tetraethylammonium ion, and N,N,N-trimethylmyrtenylammonium salts.

Any organic structure-directing agent for producing an FAU type zeolite may not be used, and tetraethylammonium hydroxide containing a tetraethylammonium ion may be used.

Any organic structure-directing agent for producing an MOR type zeolite may not be used, and tetraethylammonium hydroxide or tetraethylammonium bromide containing a tetraethylammonium ion may be used.

Any organic structure-directing agent for producing an EON type zeolite may not be used, and there may be used a substance containing a bis(2-hydroxyethyl) dimethylammonium ion, and tris(2-hydroxyethyl)methylammonium. The organic structure-directing agent for producing the EON type zeolite may be bis(2-hydroxyethyl)dimethylammonium chloride or tris(2-hydroxyethyl)methylammonium hydroxide.

Metal-containing particle source

In the case where no ion exchange using an acid is carried out after the step of obtaining the zeolite including the metal-containing particles, it is preferable that a metal contained in the metal-containing particle source contained in the reaction mixture contains at least one of metals selected from the group consisting of Cr, Mn, Fe, Co, Ni, Cu, Zn, Ga, Ge, Sn, Zr, Rh, Ru, Pd, Pt, Ag, Ir, Au, Nb and Mo. The metal-containing particle source may also be a compound containing the above-mentioned metal. The metal-containing particle source includes hydroxides, nitrate salts, acetate salts, silicate salts and ammine complex salts containing the metal. In the case where a metal contained in the metal-containing particles is, for example, Ni, the metal-containing particle source includes nickel hydroxide, nickel nitrate, nickel acetate, nickel phyllosilicate and nickel ammine complexes.

In the case where the ion exchange using an acid is carried out after the step of obtaining the zeolite including the metal-containing particles, it is preferable that a metal contained in the metal-containing particle source contained in the reaction mixture is a noble metal, and it is preferable that the metal contains at least one of metals selected from the group consisting of Rh, Ru, Pd, Pt, Ag, Ir and Au. The metal-containing particle source may be a compound containing the above-mentioned metal, and may be a simple metal. The metal-containing particle source includes hydroxides, nitrate salts, acetate salts, silicate salts and ammine complex salts containing the metal. In the case where a metal contained in the metal-containing particles is, for example, Ag, the metal-containing particle source includes silver hydroxide, silver nitrate, silver acetate, silver-containing colloidal silica and silver sulfate.

For example, in the case of Pt, the metal-containing particle source includes platinum nitrate, platinum chloride, platinum-containing colloidal silica, tetraammineplatinum hydroxide, tetraammineplatinum nitrate and dinitrodiammineplatinum nitrate.

Water

The reaction mixture contains water and the water is preferably deionized water.

Alkali metal source

In the case where the reaction mixture contains the alkali metal source, the alkali metal source to be usable is, for example, sodium hydroxide. Here, in the case of using sodium silicate as the silica source, or in the case of using sodium aluminate as the alumina source, the sodium being an alkali metal component contained therein is also an alkali metal component. The alkali metal source is calculated as the sum of all alkali metal components in the reaction mixture.

Reducing agent

In the case where the reaction mixture contains the reducing agent, the reducing agent includes 2-ascorbinic acid, hydrazine, sodium borohydride, hypophosphite salts and glycerol. The reducing agent reduces a metal contained in the metal-containing particle source and can provide a zeolite encapsulating the metal-containing particles being metal particles composed of a simple metal reduced. It is preferable that the reducing agent is contained, in the reaction mixture, in an amount equivalent to or higher than the metal in atomic weight ratio.

A atom source

The reaction mixture may contain an A atom source whose A atom is introduced in the framework of the zeolite in place of Al. The A atom contained in the A atom source is preferably at least one of atoms selected from the group consisting of B, Ga, Ge, Zr, Cu, Fe, Zn, Sn, P, Co, Mn, Cr and Hf. In the case where the reaction mixture contains the A atom source, it is preferable that the reaction mixture has a composition in which the total of Al and the A atom with respect to Si in the reaction mixture is represented by the following atomic ratio. The A atom source may be a compound containing an A atom, and includes hydroxides, nitrate salts, sulfate salts, alkoxides and silicates containing the A atom.

(Al + A)/Si atomic ratio = 0.0005 or higher and 1.0 or lower.

The A atom is introduced in the framework of the zeolite in place of Al and when the zeolite is ion exchanged using an acid or an ammonium salt, at least a part or the entire of the A atoms introduced in the framework of zeolite is removed, whereby there can be obtained the zeolite maintaining an (Al + A)/Si atomic ratio in the range of 0.0005 or higher and 1.0 or lower and having a $SiO_2/Al_2O_3$ molar ratio in the range of 20 or higher and 4,000 or lower. The (Al + A)/Si atomic ratio is more preferably 0.002 or higher and 0.2 or lower and still more preferably 0.01 or higher and 0.15 or lower, and may be 0.02 or higher and may be 0.12 or lower.

Reaction mixture

The addition order to be adoptable of each raw material when the reaction mixture is prepared is the order in which the reaction mixture homogeneously mixed is easily obtained. For example, in the case of containing the alkali metal source, at room temperature, the alumina source is added and dissolved in an aqueous solution containing the alkali metal source, and then the silica source is added and stirred and mixed to thereby obtain the reaction mixture homogeneously mixed. In the case of using aluminosilicate gel as the alumina source, it may be that the aluminosilicate gel is added to water to make a gel slurry, and the other raw materials are added, and thereafter, as required, the alkali metal source is added. The addition order of the alumina source is not limited thereto, and it may be that the gel slurry having the aluminosilicate gel added in water, together with the other raw materials, is mixed, as required, in an aqueous solution containing the alkali metal source. The temperature at which the reaction mixture is prepared is usually room temperature (20°C to 25°C).

The reaction mixture, before being subjected to the first heating to obtain the crystallized powder, may be allowed to stand still at a lower temperature than the temperature for the first heating for a certain time to be aged. The aging refers to holding the reaction mixture for a certain time at one and same temperature lower than the first heating for the crystallization. The aging temperature may be a temperature from room temperature (20°C to 25°C) or higher and 100°C or lower, and the aging time may be 5 hours or longer and 24 hours or shorter.

Step of obtaining a crystallized powder

The reaction mixture can give the crystallized powder by being subjected to first heating at a temperature of 100°C or higher and 200°C or lower. The heating carried out on the reaction mixture is called the first heating. The first heating may be carried out in the state that the reaction mixture is allowed to stand still, or may be carried out in the state that the reaction mixture is stirred. The first heating temperature may be a temperature of 120°C or higher and 180°C or lower. The first heating time may be 5 hours or longer and 150 hours or shorter, or may be 10 hours or longer and 145 hours or shorter. The first heating may be carried out at the atmospheric pressure or may be carried out under pressure. After the first heating, the crystallized powder is separated from a mother liquor by filtration, washed with water or warm water and dried to thereby obtain the crystallized powder.

Step of obtaining the zeolite encapsulating the metal-containing particles

The obtained crystallized powder is subjected to second heating to remove remaining organic substances in the powderized zeolite framework structure. The heating for removing organic substances remaining in the framework structure of the crystallized powder is called second heating. The second heating may be at a temperature at which the organic substances can be removed, and is carried out preferably in the range of 500°C or higher and 800°C or lower. Then, in order to maintain the framework structure of the obtained zeolite, the raising the temperature is carried out preferably up to a temperature of the second heating over 5 hours or longer, and may be carried out over 8 hours or longer and may be carried out over 10 hours or longer. The time for which the second heating temperature is maintained after the raising the temperature up to the temperature of the second heating is preferably 0.5 hour or longer and 3 hours or shorter.

Step of obtaining the ammonium ion ($NH_4^+$) type zeolite

For the zeolite encapsulating the metal-containing particles, alkali metal ions contained in the framework structure or ions contained in the organic structure-directing agent (for example, tetraethylammonium ions) are ion exchanged for ammonium ions (NH$_4^+$) using an ammonium salt to thereby obtain the ammonium ion (NH$_4^+$) type zeolite.

In the case where the reaction mixture contains the A atom source, an A atom is introduced in the framework of the zeolite in place of Al or Si. When alkali metal ions contained in the crystal structure or ions contained in the organic structure-directing agent (for example, tetraethylammonium ions) are ion exchanged for ammonium ions (NH$_4^+$) using an ammonium salt, an aqueous solution containing the ammonium salt hydrolyzes the A atom and at least a part of or the entire of the A atoms is eliminated from the framework of the zeolite.

In the case where the reaction mixture contains the A atom source, the A atom is introduced in the framework of the zeolite in place of Al or Si. When alkali metal ions contained in the crystal structure or ions contained in the organic structure-directing agent (for example, tetraethylammonium ions) are ion exchanged for hydrogen ions (H$^+$) using hydrogen ions, an acidic solution hydrolyzes the A atom and at least a part of or the entire of the A atoms is eliminated from the framework of the zeolite.

Step of obtaining the hydrogen ion (H$^+$) type zeolite

By further subjecting the ammonium ion (NH$_4^+$) type zeolite to third heating for ion exchange, there may be obtained the hydrogen ions (H$^+$) type zeolite to be used as a solid acid catalyst. The temperature of the third heating is preferably in the range of 300°C or higher and 600°C or lower. The time of the third heating is preferably 1 hour or longer and 5 hours or shorter.

Step of obtaining the zeolite encapsulating the reduced metal-containing particles

In the case where the reaction mixture contains no reducing agent, it is preferable that after the hydrogen ion (H$^+$) type zeolite is obtained, the zeolite containing hydrogen ions (H$^+$) and encapsulating the metal-containing particles is subjected to fourth heating at a temperature of 200°C or higher and 900°C or lower in an atmosphere containing the reducing agent to reduce metal ions in the metal-containing particles to a metal to thereby obtain the zeolite encapsulating the reduced metal-containing particles. The metal-containing particles may be metal particles containing a simple metal reduced. The reducing agent includes nitrogen gas, hydrogen gas, carbon monoxide gas, and carbon, coke and the like as reducing compounds. The temperature of the fourth heating may be a temperature at which a metal contained in the metal-containing particles is reduced by the reducing agent, and is preferably in the range of 200°C or higher and 900°C or lower. In order to maintain the framework structure of the obtained zeolite, the temperature is raised up to the fourth heating temperature preferably over 10 hours, and may be raised over 6 hours or longer and may also be raised over 2 hours or longer. The time for which the fourth heating temperature is held after the temperature is raised up to the fourth heating temperature is preferably 0.5 hour or longer and 2 hours or shorter. In the case where the reaction mixture contains the reducing agent, there may not be included the step of obtaining the zeolite encapsulating the reduced metal-containing particles by the fourth heating together with the reducing agent.

In the case where the metal of the metal-containing particle source contained in the reaction mixture contains at least one of metals selected from the group consisting of Cr, Mn, Fe, Co, Ni, Cu, Zn, Ga, Ge, Sn, Zr, Rh, Ru, Pd, Pt, Ag, Ir, Au, Nb and Mo, and the reaction mixture contains no reducing agent, after the step of obtaining the zeolite encapsulating the metal-containing particles by the second heating, it is preferable that there are included the step of obtaining the ammonium ion (NH$_4^+$) type zeolite using an ammonium salt, the step of obtaining the hydrogen ion (H$^+$) type zeolite by carrying out the third heating for ion exchange, and the step of obtaining the zeolite encapsulating the reduced metal-containing particles by carrying out the fourth heating together with the reducing agent.

In the case where the metal of the metal-containing particle source contained in the reaction mixture contains at least one of metals selected from the group consisting of Cr, Mn, Fe, Co, Ni, Cu, Zn, Ga, Ge, Sn, Zr, Rh, Ru, Pd, Pt, Ag, Ir, Au, Nb and Mo, and the reaction mixture contains the reducing agent, after the step of obtaining the zeolite encapsulating the metal-containing particles by the second heating, it is preferable that there are included the step of obtaining the ammonium ion (NH$_4^+$) type zeolite using an ammonium salt, and the step of obtaining the hydrogen ion (H$^+$) type zeolite by the third heating.

Step of obtaining the hydrogen ion (H$^+$) type zeolite by an acid treatment

In the case where the metal of the metal-containing particle source contained in the reaction mixture is a noble metal, and contains at least one of metals selected from the group consisting of Rh, Ru, Pd, Pt, Ag, Ir and Au, and the reaction mixture contains the reducing agent, after the step of obtaining the zeolite encapsulating the metal-containing particles by the second heating, the zeolite may be calcined, and it is preferable to include the step of obtaining the hydrogen ion (H$^+$) type zeolite encapsulating the metal-containing particles by carrying out an acid treatment to ion exchange alkali metal ions contained in the framework structure of the zeolite or ions contained in the organic structure-directing agent (for example, tetraethylammonium ions) for hydrogen ions (H$^+$). The acid to be used for the acid treatment suffices as long as being an acid other than concentrated nitric acid, and for example, sulfuric acid, hydrochloric acid, dilute nitric acid, phosphoric acid and the like can be used. The acid treatment can also be carried out using an aqueous solution of a nitrate salt or a sulfate salt.

In the case where the reaction mixture contains the A atom source, the A atom is introduced in the framework of the zeolite in place of Al. When alkali metal ions or ions contained in the organic structure-directing agent (for example, tetraethylammonium ions) are ion exchanged for hydrogen ions ($H^+$) by the acid treatment, an aqueous solution containing the acid hydrolyzes the A atom and at least a part of or the entire of the A atoms is eliminated from the framework of the zeolite.

The zeolite encapsulating the metal-containing particles obtained by the production method of the first aspect or the production method of the second aspect is obtained by obtaining the crystallized powder in the state that the reaction mixture before the crystallization contains the metal-containing particle source, and removing the organic structure-directing agent. The metal-containing particles are encapsulated not only in specific sites of the outer surface, the region of the outer surface, or the like of the zeolite, but also in cross-sectional central parts of the zeolite.

Hydrocarbon adsorbent

The zeolite having large pores with 12-member rings in a framework structure and encapsulating the metal-containing particles can be used as a hydrocarbon adsorbent. It is preferable that the hydrocarbon adsorbent contains the zeolite having large pores with 12-member rings in a framework structure and encapsulating the metal-containing particles. The hydrocarbon adsorbent can be used for an exhaust gas purifying catalyst formed using an exhaust gas purifying composition containing the hydrocarbon adsorbent as described later.

Exhaust gas purifying composition

The zeolite having large pores with 12-member rings in a framework structure and encapsulating the metal-containing particles can be used for the exhaust gas purifying composition. An exhaust gas purifying catalyst formed using the exhaust gas purifying composition containing the zeolite having large pores with 12-member rings in a framework structure and encapsulating the metal-containing particles, even in the case of being exposed to a severe thermal environment, can maintain the hydrocarbon adsorbency and can maintain a high catalytic reactivity. Such an exhaust gas purifying composition can exhibit stable and high exhaust gas purifying performance as an exhaust gas purifying catalyst for internal combustion engines using fossil fuel as their power source, such as gasoline engines and diesel engines.

The exhaust gas purifying composition may contain other components other than the zeolite having large pores with 12-member rings in a framework structure and encapsulating the metal-containing particles. The other components include conventionally known catalyst materials.

The form of the exhaust gas purifying composition may be any of powdery shape, paste shape, granular shape. For example, the exhaust gas purifying composition can be used as a catalyst layer formed on a catalyst support. As the catalyst support, for example, a support composed of a ceramic or a metallic material can be used. The ceramic to be used as the catalyst support includes alumina ($Al_2O_3$), mullite ($3Al_2O_3$-$2SiO_2$), cordierite ($2MgO$-$2Al_2O_3$-$5SiO_2$), aluminum titanate ($Al_2TiO_5$) and silicon carbide (SiC). Examples of the metallic material to be used as the catalyst support include stainless steel. The shape of the catalyst support is not especially limited, but examples thereof include honeycomb shapes, plate shapes and pellet shapes. It is preferable that the exhaust gas purifying catalyst has a catalyst support and a hydrocarbon adsorbing part which contains a hydrocarbon adsorbent containing the zeolite having large pores with 12 member rings in a framework structure and encapsulating the metal-containing particles and is formed on the catalyst support.

A catalyst structure using the exhaust gas purifying composition as a catalyst layer may contain a catalyst layer composed of a conventionally known catalyst material other than the exhaust gas purifying composition. The catalyst structure using the exhaust gas purifying composition as a catalyst layer can also be used as DPF (Diesel Particulate Filter) and GPF (Gasoline Particulate Filter).

Examples

Hereinafter, the present invention will be described in more detail based on Examples and Comparative Examples. The present invention is not limited to these Examples.

Silica source

Colloidal silica
Example 1: Snowtex(R) ST-O (manufactured by Nissan Chemical Industries, Ltd.)

Example 2: Snowtex(R) ST-O-40 (manufactured by Nissan Chemical Industries, Ltd.)
Example 3: Snowtex(R) ST-O (manufactured by Nissan Chemical Industries, Ltd.)

Alumina source
Examples 1 to 3: sodium aluminate (manufactured by Fujifilm Wako Pure Chemical Corp.)
Organic structure-directing agent
A tetraethylammonium hydroxide (TEAOH) aqueous solution
Metal-containing particle source

Metal: Ni
Metal-containing particle source: Nickel phyllosilicate (manufactured by Mitsui Mining & Smelting Co. Ltd.)

Alkali metal source
Sodium hydroxide (manufactured by Fujifilm Wako Pure Chemical Corp.)
A atom source

Example 2: A atom: Ga, gallium nitrate (manufactured by Kojundo Chemical Laboratory Co. Ltd.)
Example 3: A atom: B, boric acid (manufactured by Fujifilm Wako Pure Chemical Corp.)

Example 1: Step of preparing a reaction mixture

There was prepared a reaction mixture containing the above-mentioned silica source, alumina source, organic structure-directing agent, metal-containing particle source, deionized water and alkali metal source. The reaction mixture had a composition represented by the following molar ratio or atomic ratio. The reaction mixture of Example 1 used no A atom source. The metal content (Ni) contained in the metal-containing particle source was, with respect to the total amount of a solid content of the reaction mixture, 1.00% by mass. The metal content contained in the metal-containing particle source was calculated from a solid content of each raw material contained in the reaction mixture and an amount of the metal contained in the metal-containing particle source. The molar ratio or the atomic ratio of each component in the reaction mixture was a charging ratio in a raw material mixture.

Organic structure-directing agent (TEAOH)/Si molar ratio = 0.2

$$SiO_2/Al_2O_3 \text{ molar ratio} = 50$$

$$\text{Alkali metal (Na)/Si atomic ratio} = 0.2$$

$$Al/Si \text{ atomic ratio} = 0.04$$

Example 1: Step of obtaining a crystallized powder

The obtained reaction mixture was filled in a closed container and subjected to first heating at 160°C for 72 hours under revolution at 20 rpm together with the container to thereby obtain a crystallized powder. After the first heating, the crystallized powder was subjected to solid-liquid separation and the solid-liquid separated crystallized powder was washed with deionized water until the pH of a filtrate became neutral, and dried to thereby obtain a crystallized powder.

Example 1: Step of obtaining a zeolite encapsulating the metal-containing particles

The obtained crystallized powder was heated in the air atmosphere up to 600°C over 10 hours and subjected to second heating at 600°C for 1 hour to remove organic substances to thereby obtain a BEA type zeolite having large pores with 12-member rings in a framework structure and encapsulating the metal-containing particles. The framework structure of the obtained zeolite was confirmed using a powder X-ray diffractometer described later and measuring an X-ray diffraction spectrum of the obtained zeolite. The state of the metal-containing particles in the zeolite was checked by measurement by a transmission electron microscope (TEM). There was confirmed from a TEM image the state that the metal-containing particles were present not on the zeolite surface but inside the zeolite, and the metal-containing particles were encapsulated in the zeolite having large pores with 12-member rings.

Example 1: Step of obtaining an ammonium ion ($NH_4^+$) type zeolite

1 g of the BEA type zeolite encapsulating the metal-containing particles was dipped in 10 g of a 1-mol/L ammonium chloride aqueous solution at 60°C to ion exchange alkali metal ions ($Na^+$) contained in the BEA type zeolite for ammonium ions ($NH_4^+$) to thereby obtain an ammonium ion ($NH_4^+$) type-BEA type zeolite.

Example 1: Step of obtaining a hydrogen ion ($H^+$) type zeolite

The obtained ammonium ion ($NH_4^+$) type-BEA type zeolite was dried and thereafter was subjected to third heating in the air atmosphere at 550°C for 3 hours to ion exchange ammonium ions ($NH_4^+$) contained in the BEA type zeolite for hydrogen ions ($H^+$) to thereby obtain a hydrogen ion ($H^+$) type-BEA type zeolite.

Example 1: Step of obtaining a zeolite encapsulating the reduced metal-containing particles

The obtained hydrogen ion ($H^+$) type-BEA type zeolite was subjected to fourth heating in a hydrogen gas atmosphere (hydrogen ($H_2$) gas: 10% by volume, Ar gas: 90% by volume) at 800°C for 1 hour to fully reduce the hydrogen ion ($H^+$) type-BEA type zeolite. Thereby, nickel ions contained in the metal-containing particles were reduced to metallic Ni to thereby obtain a hydrogen ion ($H^+$) type-BEA type zeolite encapsulating the metal-containing particles composed of metallic Ni.

There are shown below the molar ratio or the atomic ratio of each component contained in a composition of the obtained hydrogen ion ($H^+$) type-BEA type zeolite encapsulating the metal-containing particles. Moreover, the hydrogen ion ($H^+$) type-BEA type zeolite contained, with respect to the total amount, 2.26% by mass of Ni. The content of Ni, and the molar ratio or the atomic ratio of each component in the zeolite were measured by measuring methods described later.

$$SiO_2/Al_2O_3 \text{ molar ratio} = 30$$

$$Al/Si \text{ atomic ratio} = 0.067$$

Example 2: Step of preparing a reaction mixture

There was prepared a reaction mixture containing the above-mentioned silica source, alumina source, organic structure-directing agent, metal-containing particle source, deionized water, alkali metal source and A atom source, and having a composition represented by the following molar ratio or atomic ratio of each component. The metal content (Ni) contained in the metal-containing particle source was, with respect to the total amount of a solid content of the reaction mixture, 2.40% by mass. The A atom contained in the reaction mixture was Ga, and the A atom source used was gallium nitrate. Gallium was, with respect to 100 % by mass of the amount of the solid content of the reaction mixture, in terms of oxide ($Ga_2O_3$), 15% by mass.

Organic structure-directing agent (TEAOH)/Si molar ratio = 0.4

$$SiO_2/Al_2O_3 \text{ molar ratio} = 200,000$$

$$Alkali \text{ metal (Na)/Si atomic ratio} = 0.2$$

$$(Al + A \text{ (Ga))/Si atomic ratio} = 0.04$$

Example 2: Steps other than the step of preparing the reaction mixture

A hydrogen ion ($H^+$) type-BEA type zeolite encapsulating the metal-containing particles composed of metallic Ni was obtained as in Example 1 by carrying out, except for preparing the reaction mixture having the above composition, a step of obtaining a crystallized powder, a step of obtaining a zeolite encapsulating the metal-containing particles, a step of obtaining an ammonium ion ($NH_4^+$) type zeolite, a step of obtaining a hydrogen ion ($H^+$) type zeolite, and a step of obtaining a zeolite encapsulating the reduced metal-containing particles.

In the step of obtaining an ammonium ion ($NH_4^+$) type zeolite, Ga introduced as the A atom in place of Al in the framework of the zeolite was hydrolyzed with the ammonium chloride aqueous solution, so that at least a part of or the entire of Ga atoms was eliminated from the framework of the zeolite.

The framework structure of the obtained zeolite was confirmed using a powder X-ray diffractometer described later and measuring an X-ray diffraction spectrum of the obtained zeolite. There was confirmed from a TEM image the state that the metal-containing particles were present not on the zeolite surface but inside the zeolite, and the metal-containing particles were encapsulated in the zeolite having large pores with 12-member rings.

There are shown below the molar ratio or the atomic ratio of each component contained in a composition of the obtained hydrogen ion ($H^+$) type-BEA type zeolite encapsulating the metal-containing particles. Then, the hydrogen ion ($H^+$) type-BEA type zeolite contained, with respect to the total amount, 2.40% by mass of Ni.

$$SiO_2/Al_2O_3 \text{ molar ratio} = 2,800$$

$$(Al + A \text{ (Ga))}/Si \text{ atomic ratio} = 0.120$$

Example 3: Step of preparing a reaction mixture

There was prepared a reaction mixture containing the above-mentioned silica source, alumina source, organic structure-directing agent, metal-containing particle source, deionized water, alkali metal source and A atom source, and having a composition represented by the following molar ratio or atomic ratio of each component. The metal content (Ni) contained in the metal-containing particle source was, with respect to the total amount of a solid content of the reaction mixture, 2.20% by mass. The A atom contained in the reaction mixture was B, and the A atom source used was boric acid. Boron was, with respect to 100 % by mass of the amount of the solid content of the reaction mixture, in terms of oxide ($B_2O_3$), 3% by mass.

Organic structure-directing agent (TEAOH)/Si molar ratio = 0.4

$$SiO_2/Al_2O_3 \text{ molar ratio} = 450$$

$$\text{Alkali metal (Na)}/Si \text{ atomic ratio} = 0$$

$$(Al + A \text{ (Ga)} + A \text{ (B)))}/Si \text{ atomic ratio} = 0.011$$

Example 3: Steps other than the step of preparing the reaction mixture

A hydrogen ion ($H^+$) type-BEA type zeolite encapsulating the metal-containing particles composed of metallic Ni was obtained as in Example 1 by carrying out, except for preparing the reaction mixture having the above composition, a step of obtaining a crystallized powder, a step of obtaining a zeolite encapsulating the metal-containing particles, a step of obtaining an ammonium ion ($NH_4^+$) type zeolite, a step of obtaining a hydrogen ion ($H^+$) type zeolite, and a step of obtaining a zeolite encapsulating the reduced metal-containing particles.

In the step of obtaining an ammonium ion ($NH_4^+$) type zeolite, B introduced as the A atom in place of Al in the framework of the zeolite was hydrolyzed with the ammonium chloride aqueous solution, so that at least a part of or the entire of B atoms was eliminated from the framework of the zeolite.

The framework structure of the obtained zeolite was confirmed using a powder X-ray diffractometer described later and measuring an X-ray diffraction spectrum of the obtained zeolite. There was confirmed from a TEM image the state that the metal-containing particles were present not on the zeolite surface but inside the zeolite, and the metal-containing particles were encapsulated in the zeolite having large pores with 12-member rings.

There are shown below the molar ratio or the atomic ratio of each component contained in a composition of the obtained hydrogen ion ($H^+$) type-BEA type zeolite encapsulating the metal-containing particles. Since the entire of or a part of the boron (B) atom which is the A atom was eliminated, and the content thereof could not be measured, the Al/Si atomic ratio is shown. The hydrogen ion ($H^+$) type-BEA type zeolite contained, with respect to the total amount, 3.40% by mass of Ni.

$$SiO_2/Al_2O_3 \text{ molar ratio} = 230$$

$$Al/Si\ atomic\ ratio = 0.027$$

Comparative Example 1

1 g of a commercially available hydrogen ion (H$^+$) type-BEA type zeolite (SiO$_2$/Al$_2$O$_3$ molar ratio = 40, manufactured by Tosoh Corp.) was dipped in 2.5 g of a 0.25 mol/L nickel (II) acetate aqueous solution; moisture was evaporated to dryness; and a wet powder was collected. The obtained wet powder was dried at 100°C for 8 hours, in the air atmosphere, and subjected to a heat treatment at 600°C for 3 hours. Thereby, there was obtained a hydrogen ion (H$^+$) type-BEA type zeolite containing Ni, having a composition with the following molar ratio or the atomic ratio.

Whether the metal-containing particles were encapsulated in the obtained BEA type zeolite containing Ni or not was checked with a transmission electron microscope (TEM). The BEA type zeolite of Comparative Example 1 did not encapsulate particles composed of metallic Ni, and evidently had particles composed of metallic Ni adhered on the surface of the zeolite. The metal content (Ni) contained in the metal-containing particle source was, with respect to the total amount of a solid content of the reaction mixture, 2.75% by mass.

$$SiO_2/Al_2O_3 = 40$$

$$Al/Si\ atomic\ ratio = 0.05$$

Comparative Example 2

1 g of a commercially available hydrogen ion (H$^+$) type-BEA type zeolite (SiO$_2$/Al$_2$O$_3$ molar ratio = 400, manufactured by Tosoh Corp.) was dipped in 2 g of a 0.25 mol/L nickel (II) acetate and 0.2 mol/L gallium (III) nitrate aqueous solution; moisture was evaporated to dryness; and a wet powder was collected. The obtained wet powder was dried at 100°C for 8 hours, in the air atmosphere, and subjected to a heat treatment at 600°C for 3 hours. Thereby, there was obtained a hydrogen ion (H$^+$) type-BEA type zeolite containing Ni, having a composition with the following molar ratio or the atomic ratio. Whether the metal-containing particles were encapsulated in the obtained BEA type zeolite containing Ni or not was checked with a transmission electron microscope (TEM). The BEA type zeolite of Comparative Example 2 did not encapsulate particles composed of metallic Ni, and evidently had particles composed of metallic Ni adhered on the surface of the zeolite. The metal content (Ni) contained in the metal-containing particle source was, with respect to the total amount of a solid content of the reaction mixture, 1.57% by mass.

$$SiO_2/Al_2O_3 = 400$$

$$(Al + A\ (Ga))/Si\ atomic\ ratio = 0.025$$

There are shown in Table 1 the charging ratio, the metal and the metal amounts in the metal-containing particles in each raw material mixture of Examples and Comparative Examples. There are shown in Table 2 the results of the following measurements for each zeolite of Examples and Comparative Examples.

Framework structure of the zeolite

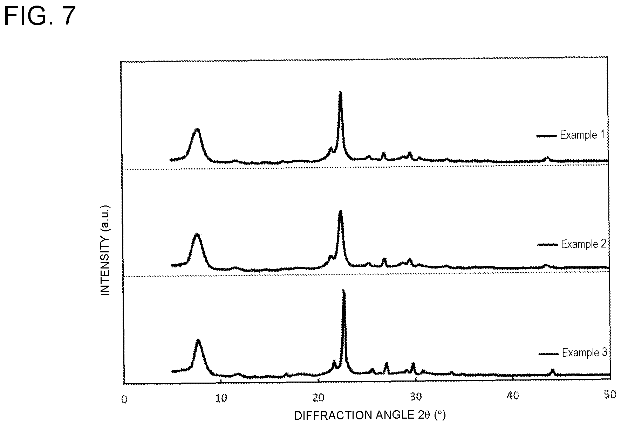

By measurement of X-ray diffraction spectra of the zeolites obtained in Examples 1 to 3 using a powder X-ray diffractometer, it was confirmed that the zeolites were BEA type zeolites having large pores with 12-member rings. In an X-ray diffraction spectrum using the CuKα line using a powder X-ray diffractometer, if there are diffraction peaks at positions of diffraction angles 20 of 8 ± 1.5° and 22.8 ± 1°, a zeolite can be confirmed to be a BEA type zeolite. The positions of diffraction angles 2θ (°) of diffraction peaks in the X-ray diffraction spectrum were identical to the positions of diffraction angles 20 (°) of diffraction peaks in X-ray diffraction spectrum disclosed by The International Zeolite association. X-ray diffraction spectra of the obtained BEA type zeolites are shown in Figure 7.

Preparation of measurement samples of the zeolites

Each zeolite was filled in a vinyl chloride tube with 30 mm in diameter, and compression molded to thereby prepare measurement samples.

EP 4 501 852 A1

SiO$_2$/Al$_2$O$_3$ molar ratio of the zeolites

Using a scanning X-ray fluorescence analyzer (ZSX Primus II, Rigaku Corp.), the Si amount and the Al amount in the measurement samples were measured by elemental analysis, and the SiO$_2$/Al$_2$O$_3$ ratio was calculated from the measured Si amount and Al amount.

(Al + A)/Si molar ratio of the zeolites

Using a scanning X-ray fluorescence analyzer (ZSX Primus II, Rigaku Corp.), the Si amount and the Al amount in the measurement samples were measured by elemental analysis, and the SiO$_2$/Al$_2$O$_3$ ratio was calculated from the measured Si amount and Al amount.

The metal amounts in the metal-containing particles in the zeolite

Using a scanning X-ray fluorescence analyzer (ZSX Primus II, manufactured by Rigaku Corp.), the amount of the metal (Ni) in the measurement sample was measured by elemental analysis, and the content (% by mass) of the metal (Ni) with respect to the total amount of the zeolite was calculated from the amount of Ni measured.

State of the metal-containing particles in the zeolites

The state of the metal-containing particles in the zeolites was checked with a transmission electron microscope (TEM). If there was be observed by the TEM image the state that the metal-containing particles were present not on the surface of the zeolite but inside the zeolite, it could be confirmed that the zeolite having large pores with 12-member rings encapsulated the metal-containing particles.

The amount of toluene desorbed/the amount thereof adsorbed

For each zeolite of Examples and Comparative Examples, the zeolite was heated from 50°C to 500°C by a temperature-programmed reaction method while toluene was made to flow, and there were measured the adsorption temperature, the desorption initiating temperature, the adsorption amount and the desorption amount of toluene.
Specifically, 0.1 g of a measurement sample of each hydrocarbon adsorbent was packed in a quartz reaction tube of a flow reactor, and using a fixed bed flow reactor as a flow reactor; the measurement sample was heated at a temperature-rise rate of 20°C from 50°C to 500°C by the temperature programmed reaction method while a gas for evaluation containing 71 ppm of toluene was made to flow at 1 L/min to cause toluene to be adsorbed and desorbed. The measurement of adsorption and desorption of toluene on and from the zeolite was made by taking, decreases in the amount of toluene as the adsorption amount and the desorption amount detected by a downstream detector (VMS-1000F, manufactured by Shimadzu Corp.) with respect to the flow amount of toluene. In regions where the amount value detected was equal to or larger than the flow amount to the zeolite, hydrocarbon having been adsorbed on the zeolite was desorbed. The proportion (ZD$_2$/ZD$_1$ × 100) of the total molar amount ZD$_2$ of toluene desorbed from the zeolite at 250°C or higher to the total molar amount ZD$_1$ of toluene adsorbed on the zeolite at 50°C or higher and lower than 250°C was defined as the desorption amount/adsorption amount (%) of hydrocarbon. The results are shown in Table 2.

Measurement condition
Gas for evaluation: toluene was 71 ppm, the balance was nitrogen (N$_2$)

[Table 1]

| | | Reaction Mixture (charging ratio) | | | | | |
|---|---|---|---|---|---|---|---|
| | | organic structure-directing agent(TEOH)/Si molar ratio | SiO$_2$/Al$_2$O$_3$ molar ratio | Na/Si atomic ratio | (Al+A)/-Si atomic ratio | Metal | Amount of metal in metal-containing particles (% by mass) |
| | Example 1 | 0.2 | 50 | 0.2 | 0.040 | Ni | 1.00 |
| | Example 2 | 0.4 | 200000 | 0.2 | 0.040 | Ni | 2.40 |
| | Example 3 | 0.4 | 450 | 0.0 | 0.011 | Ni | 2.20 |

17

(continued)

| | Reaction Mixture (charging ratio) | | | | | |
|---|---|---|---|---|---|---|
| | organic structure-directing agent(TEOH)/Si molar ratio | $SiO_2/Al_2O_3$ molar ratio | Na/Si atomic ratio | (Al+A)/-Si atomic ratio | Metal | Amount of metal in metal-containing particles (% by mass) |
| Comparative Example 1 | - | - | - | - | Ni | 2.75 |
| Comparative Example 2 | - | - | - | - | Ni | 1.57 |

[Table 2]

| | Zeolite | | | | | Evaluation | | | |
|---|---|---|---|---|---|---|---|---|---|
| | | | | | | | per 1 g of zeolite | | |
| | Framework structure | SiO$_2$/Al$_2$O$_3$ molar ratio | (Al+A)/Si atomic ratio | Amount of metal in metal-containing particles (% by mass) | state of metal-containing particles | Desorption initiating temperature (°C) | Adsorption amount (g) | Desorption amount 250°C or higher (g) | Desorption amount /adsorption amount (%) |
| Example 1 | BEA | 30 | 0.067 | 2.26 | encapsulated | 84 | 0.001007 | 0.000373 | 37 |
| Example 2 | BEA | 2800 | 0.120 | 2.40 | encapsulated | 84 | 0.001101 | 0.000694 | 63 |
| Example 3 | BEA | 230 | 0.027 | 3.40 | encapsulated | 88 | 0.001552 | 0.000186 | 12 |
| Comparative Example 1 | BEA | 40 | 0.050 | 2.75 | adhered on surface | 78 | 0.001290 | 0.000116 | 9 |
| Comparative Example 2 | BEA | 400 | 0.025 | 1.57 | adhered on surface | 76 | 0.001198 | 0.000024 | 2 |

As shown in Table 2, the zeolites of Examples 1 to 3 exhibited a higher desorption initiating temperature than the zeolites of Comparative Examples 1 and 2, in which the metal-containing particles were adhered on their surface. It was confirmed that the zeolites of Examples 1 to 3 had a higher desorption amount/adsorption amount (%) of a desorption amount of toluene at temperatures of 250°C or higher with respect to the adsorption amount than that of the zeolites of Comparative Examples 1 and 2, and could store toluene up to a temperature as high as about 250°C, and the toluene could be desorbed from the zeolites at high temperatures of 250°C or higher. The zeolites of Examples 1 to 3, even in a severe thermal environment, maintained the hydrocarbon adsorbency and had increased catalytic reactivity and improved heat resistance.

Figure 7 is a diagram showing X-ray diffraction spectra of the BEA type zeolites obtained in Examples 1 to 3. The zeolites obtained in Examples 1 to 3, in X-ray diffraction spectra using a powder X-ray diffractometer, had diffraction peaks at positions of diffraction angles 2θ of 8 ± 1.5° and 22.8 ± 1°, and it was confirmed that the zeolites were BEA type zeolites having large pores with 12-member rings.

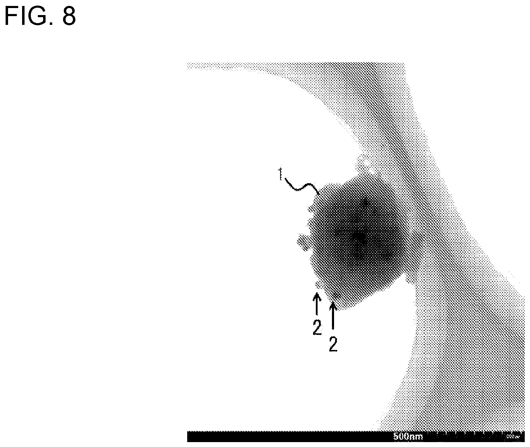

Figure 8 is a TEM photograph of the BEA type zeolite obtained in Comparative Example 1. In Figure 8, reference numeral 1 denotes the BEA type zeolite, and black particles indicated at the tips of the black arrows show metal-containing particles 2 being particles composed of metallic Ni. As shown in Figure 8, in the TEM photograph of the BEA type zeolite of Comparative Example 1, the metal-containing particles 2 were not encapsulated in the BEA type zeolite 1, and the metal-containing particles 2 composed of metallic Ni were evidently adhered on the surface of the BEA type zeolite 1.

Observation of a TEM photograph also for the BEA type zeolite obtained in Example 1 confirmed that the metal-containing particles 2 were present not on the surface of the BEA type zeolite 1 but inside the BEA type zeolite 1, and were encapsulated in the BEA type zeolite 1. Further, the metal-containing particles 2 were not localized in the outer surface of the BEA type zeolite 1 or at specific sites in the vicinity of the outer surface thereof, and were encapsulated also in the vicinity of the outer surface of the BEA type zeolite 1 and also in the central part of the BEA type zeolite 1.

Industrial Applicability

The zeolite of the present disclosure, even in a severe thermal environment, can maintain the hydrocarbon adsorbency and can be enhanced in the catalytic reactivity, and can be improved in the heat resistance; the zeolite can be used as a hydrocarbon adsorbent; and an exhaust gas purifying catalyst using the hydrocarbon adsorbent can suitably be used for purifying exhaust gas from internal combustion engines of four-wheel automobiles, two-wheel automobiles.

Reference Signs List

1: BEA TYPE ZEOLITE
2: METAL-CONTAINING PARTICLE

**Claims**

1. A zeolite, having large pores with 12-member rings in a framework structure, and encapsulating metal-containing particles.

2. The zeolite according to claim 1, wherein the zeolite is at least one of zeolites selected from the group consisting of BEA type zeolite, MSE type zeolite, MTW type zeolite, CON type zeolite, FAU type zeolite, MOR type zeolite and EON type zeolite.

3. The zeolite according to claim 1 or 2, wherein a metal contained in the metal-containing particles contains at least one of metals selected from the group consisting of Cr, Mn, Fe, Co, Ni, Cu, Zn, Ga, Ge, Sn, Zr, Rh, Ru, Pd, Pt, Ag, Ir, Au, Nb and Mo.

4. The zeolite according to any one of claims 1 to 3, wherein a mean diameter of the 100 metal-containing particles analyzed from the transmission electron microscopic images is in a range of 0.1 nm or larger and 30 nm or smaller, wherein a mean value of the length and the breadth of the metal-containing particles is measured as a diameter of the metal-containing particles from the transmission electron microscopic image.

5. The zeolite according to any one of claims 1 to 4, wherein the metal-containing particles have a metal content in the range of 0.2% by mass or higher and 11.0% by mass or lower with respect to a total amount of the zeolite encapsulating the metal-containing particles.

6. The zeolite according to any one of claims 1 to 5, wherein the zeolite has a $SiO_2/Al_2O_3$ molar ratio in the range of 20 or higher and 4,000 or lower.

7. The zeolite according to any one of claims 1 to 6, wherein the zeolite comprises an A atom; the A atom is at least one of atoms selected from the group consisting of B, Ga, Ge, Zr, Cu, Fe, Zn, Sn, P, Co, Mn, Cr and Hf; and the zeolite has an (Al + A)/Si atomic ratio in the range of 0.02 or higher and 1.0 or lower as a ratio of a total of Al and the A atom with respect to silicon (Si) contained in the zeolite.

8. A hydrocarbon adsorbent, comprising the zeolite according to any one of claims 1 to 7.

9. An exhaust gas purifying catalyst, comprising a catalyst support, and a hydrocarbon adsorbing part comprising the hydrocarbon adsorbent according to claim 8 and formed on the catalyst support.

10. A method for producing a zeolite, comprising:

a step of preparing a reaction mixture containing a silica source, an alumina source, an organic structure-directing agent, a metal-containing particle source, water and as required, an alkali metal source;
a step of heating the reaction mixture to obtain a crystallized powder; and
a step of heating the crystallized powder to remove the organic structure-directing agent to thereby obtain the zeolite having large pores with 12-member rings in a framework structure and encapsulating metal-containing particles,
wherein the reaction mixture has a composition represented by the following molar ratio or atomic ratio, and contains 0.1% by mass or more and 12% by mass or less of a metal contained in the metal-containing particle source with respect to a total amount of a solid content of the reaction mixture:

organic structure-directing agent/Si molar ratio = 0.1 or higher and 0.9 or lower;
$SiO_2/Al_2O_3$ molar ratio = 2 or higher and 200,000 or lower; and
alkali metal/Si atomic ratio = 0 or higher and 0.5 or lower.

11. The method for producing a zeolite according to claim 10, wherein the method comprises a step of reducing the zeolite encapsulating metal-containing particles using a reducing agent.

12. A method for producing a zeolite, comprising:

a step of preparing a reaction mixture containing a silica source, an alumina source, an organic structure-directing agent, a metal-containing particle source, a reducing agent, water and as required, an alkali metal source;
a step of heating the reaction mixture to obtain a crystallized powder; and
a step of heating the crystallized powder to remove the organic structure-directing agent to thereby obtain the zeolite having large pores with 12-member rings in a framework structure and encapsulating metal-containing particles,
wherein the reaction mixture has a composition represented by the following molar ratio or atomic ratio, and contains 0.1% by mass or more and 12% by mass or less of a metal contained in the metal-containing particle source with respect to a total amount of a solid content of the reaction mixture:

organic structure-directing agent/Si molar ratio = 0.1 or higher and 0.9 or lower;
$SiO_2/Al_2O_3$ molar ratio = 2 or higher and 200,000 or lower; and
alkali metal/Si atomic ratio = 0 or higher and 0.5 or lower.

13. The method for producing a zeolite according to any one of claims 10 to 12, wherein the method comprises a step of ion-exchanging the zeolite encapsulating the metal particles in the pores using an acid or an ammonium salt.

14. The method for producing a zeolite according to any one of claims 10 to 13, wherein the reaction mixture comprises an A atom source; an A atom is at least one of atoms selected from the group consisting of B, Ga, Ge, Zr, Cu, Fe, Zn, Sn, P, Co, Mn, Cr and Hf; and the reaction mixture has a composition represented by the following atomic ratio of a total of Al and the A atom with respect to Si in the reaction mixture:

(Al + A)/Si atomic ratio = 0.001 or higher and 0.06 or lower.

15. The method for producing a zeolite according to any one of claims 10 to 14, wherein a metal contained in the metal-containing particle source contains at least one of metals selected from the group consisting of Cr, Mn, Fe, Co, Ni, Cu, Zn, Ga, Ge, Sn, Zr, Rh, Ru, Pd, Pt, Ag, Ir, Au, Nb and Mo.

16. The method for producing a zeolite according to any one of claims 12 to 14, wherein a metal contained in the metal-containing particle source contains at least one of metals selected from the group consisting of Rh, Ru, Pd, Pt, Ag, Ir and Au.

FIG. 1

| STEP OF PREPARING REACTION MIXTURE | S101 |

↓

| STEP OF OBTAINING CRYSTALLIZED POWDER | S102 |

↓

| STEP OF OBTAINING ZEOLITE ENCAPSULATING METAL-CONTAINING PARTICLES | S103 |

FIG. 2

```
┌─────────────────────────────────────────────┐
│     STEP OF PREPARING REACTION MIXTURE       │~ S101
└─────────────────────────────────────────────┘
                      ↓
┌─────────────────────────────────────────────┐
│    STEP OF OBTAINING CRYSTALLIZED POWDER     │~ S102
└─────────────────────────────────────────────┘
                      ↓
┌─────────────────────────────────────────────┐
│   STEP OF OBTAINING ZEOLITE ENCAPSULATING    │~ S103
│         METAL-CONTAINING PARTICLES           │
└─────────────────────────────────────────────┘
                      ↓
┌─────────────────────────────────────────────┐
│   STEP OF OBTAINING ZEOLITE ENCAPSULATING    │~ S106
│     REDUCED METAL-CONTAINING PARTICLES       │
└─────────────────────────────────────────────┘
```

FIG. 3

| STEP OF PREPARING REACTION MIXTURE | S101 |
| STEP OF OBTAINING CRYSTALLIZED POWDER | S102 |
| STEP OF OBTAINING ZEOLITE ENCAPSULATING METAL-CONTAINING PARTICLES | S103 |
| STEP OF OBTAINING AMMONIUM ION ($NH_4^+$) TYPE ZEOLITE | S104 |
| STEP OF OBTAINING HYDROGEN ION ($H^+$) TYPE ZEOLITE | S105 |
| STEP OF OBTAINING ZEOLITE ENCAPSULATING REDUCED METAL-CONTAINING PARTICLES | S106 |

FIG. 4

| STEP OF PREPARING REACTION MIXTURE CONTAINING REDUCING AGENT | ～ S201 |

| STEP OF OBTAINING CRYSTALLIZED POWDER | ～ S202 |

| STEP OF OBTAINING ZEOLITE ENCAPSULATING METAL-CONTAINING PARTICLES | ～ S203 |

FIG. 5

| STEP OF PREPARING REACTION MIXTURE CONTAINING REDUCING AGENT | S201 |
|---|---|
| STEP OF OBTAINING CRYSTALLIZED POWDER | S202 |
| STEP OF OBTAINING ZEOLITE ENCAPSULATING METAL-CONTAINING PARTICLES | S203 |
| STEP OF OBTAINING AMMONIUM ION (NH$_4^+$) TYPE ZEOLITE | S204 |
| STEP OF OBTAINING HYDROGEN ION (H$^+$) TYPE ZEOLITE | S205 |

FIG. 6

| STEP OF PREPARING REACTION MIXTURE CONTAINING REDUCING AGENT | ~ S201 |

| STEP OF OBTAINING CRYSTALLIZED POWDER | ~ S202 |

| STEP OF OBTAINING ZEOLITE ENCAPSULATING METAL-CONTAINING PARTICLES | ~ S203 |

| STEP OF OBTAINING HYDROGEN ION (H+) TYPE ZEOLITE BY ACID TREATMENT | ~ S206 |

FIG. 7

FIG. 8

## INTERNATIONAL SEARCH REPORT

International application No.

**PCT/JP2023/011190**

### A. CLASSIFICATION OF SUBJECT MATTER

*C01B 39/48*(2006.01)i; *B01D 53/94*(2006.01)i; *B01J 20/18*(2006.01)i; *B01J 20/30*(2006.01)i; *B01J 29/76*(2006.01)i; *B01J 29/86*(2006.01)i; *B01J 29/87*(2006.01)i; *C01B 39/06*(2006.01)i; *C01B 39/12*(2006.01)i

FI: C01B39/48; B01D53/94 280; B01J20/18 A ZAB; B01J20/18 D; B01J20/30; B01J29/76 A; B01J29/86 A; B01J29/87 A; C01B39/06; C01B39/12

According to International Patent Classification (IPC) or to both national classification and IPC

### B. FIELDS SEARCHED

Minimum documentation searched (classification system followed by classification symbols)

C01B33/20-39/54; B01J20/00-38/74; B01D53/73-53/96

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

JSTPlus/JST7580/JSTChina (JDreamIII); CAplus/REGISTRY (STN)

### C. DOCUMENTS CONSIDERED TO BE RELEVANT

| Category* | Citation of document, with indication, where appropriate, of the relevant passages | Relevant to claim No. |
|---|---|---|
| X | CN 109731608 A (INSTITUTE OF PROCESS ENGINEERING, CHINESE ACADEMY OF SCIENCES) 10 May 2019 (2019-05-10) claims, paragraphs [0001]-[0002], [0008]-[0036], examples 7-8 | 1-6, 8, 10-11, 13-15 |
| Y | | 8-9 |
| X | CN 112295594 A (NINGBO INSTITUTE OF MATERIALS TECHNOLOGY AND ENGINEERING, CHINESE ACADEMY OF SCIENCES) 02 February 2021 (2021-02-02) claims, paragraphs [0004]-[0023], [0044], examples 5-6 | 1-7, 10-11, 13-16 |
| Y | | 8-9 |
| X | WO 2017/115767 A1 (TOYOTA JIDOSHA KABUSHIKI KAISHA) 06 July 2017 (2017-07-06) claims, paragraphs [0001], [0005]-[0010], [0019]-[0020], [0025], examples 4-5, 8-9 | 1-9 |
| Y | | 8-9 |

☑ Further documents are listed in the continuation of Box C.   ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **25 May 2023** | **06 June 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**

International application No.

**PCT/JP2023/011190**

### C. DOCUMENTS CONSIDERED TO BE RELEVANT

| Category* | Citation of document, with indication, where appropriate, of the relevant passages | Relevant to claim No. |
|---|---|---|
| X | WO 2018/221696 A1 (THE FURUKAWA ELECTRIC CO., LTD.) 06 December 2018 (2018-12-06)<br>claims, paragraphs [0001]-[0004], [0007]-[0012], [0026]-[0027], [0030], [0033], [0039]-[0040], [0052], fig. 1-2, tables 1, 3, 5-9, 11, 13, 15, 17, 19, 21, 23, 25, examples | 1-9 |
| Y | | 8-9 |
| X | 遠藤海咲 ほか, "固相転換法による金属微粒子内包BEAゼオライト触媒の開発", 第37回ゼオライト研究発表会 講演予稿集, 02 December 2021, p. 57<br>1. Introduction, 2. Experiment, 3. Result and reviews, fig. 1, table 1, (ENDO, Misaki et al.), non-official translation (Development of BEA zeolite catalyst containing metal particle encapsulated by solid-phase conversion method. Lecture Preprints of the 37th Zeolite Research Presentation Meeting.) | 1-8 |
| Y | | 8-9 |
| X | MA, Yue et al. Skeleton-Sn anchoring isolated Pt site to confine subnanometric clusters within *BEA topology. Journal of Catalysis. 29 March 2021, vol. 397, pp. 44-57, DOI: 10.1016/j.jcat.2021.03.022<br>abstract, p. 45, left column, 3rd paragraph, right column, 2nd paragraph, p. 47, left column, 3rd paragraph to right column 1st paragraph, p. 56, left column, 1st paragraph to p. 57, left column, 1st paragraph, fig. 1-2, 12-13 | 1-5, 7-8 |
| A | JP 2008-542173 A (CHINA PETROLEUM & CHEMICAL CORPORATION) 27 November 2008 (2008-11-27)<br>entire text, all drawings | 1-16 |
| A | NAGAYAMA, Toshiaki et al. Hydrocarbon Desorption Characteristics of Metal-impregnated Zeolite and Its Evaluation in Vehicle Test. Journal of the Japan Petroleum Institute. 2009, vol. 52, no. 4, pp. 205-210, DOI: 10.1627/jpi.52.205<br>entire text, all drawings | 1-16 |

Form PCT/ISA/210 (second sheet) (January 2015)

**INTERNATIONAL SEARCH REPORT**
**Information on patent family members**

| International application No. |
| --- |
| **PCT/JP2023/011190** |

| Patent document cited in search report | | | Publication date (day/month/year) | Patent family member(s) | | | Publication date (day/month/year) |
| --- | --- | --- | --- | --- | --- | --- | --- |
| CN | 109731608 | A | 10 May 2019 | (Family: none) | | | |
| CN | 112295594 | A | 02 February 2021 | (Family: none) | | | |
| WO | 2017/115767 | A1 | 06 July 2017 | US | 2019/0001306 | A1 | |
| | | | | claims, paragraphs [0001], [0007]-[0085], [0114]-[0115], [0120], examples 4-5, 8-9 | | | |
| | | | | US | 2021/0331143 | A1 | |
| | | | | US | 2021/0331144 | A1 | |
| | | | | EP | 3398679 | A1 | |
| | | | | EP | 3536401 | A1 | |
| | | | | CN | 107405612 | A | |
| | | | | CN | 111569936 | A | |
| WO | 2018/221696 | A1 | 06 December 2018 | US | 2020/0114339 | A1 | |
| | | | | claims, paragraphs [0001]-[0059], [0077]-[0078], [0081], [0090]-[0091], [0106], fig. 1-2, tables 1, 3, 5-9, 11, 13, 15, 17, 19, 21, 23, 25, examples | | | |
| | | | | US | 2023/0009052 | A1 | |
| | | | | EP | 3632554 | A1 | |
| | | | | CN | 110678262 | A | |
| JP | 2008-542173 | A | 27 November 2008 | US | 2008/0261803 | A1 | |
| | | | | entire text | | | |
| | | | | WO | 2006/128374 | A1 | |
| | | | | EP | 1892040 | A1 | |
| | | | | CN | 1872685 | A | |
| | | | | SA | 2789 | B | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017128480 A